Europäisches Patentamt

European Patent Office

Office européen des brevets

(19)

(11) Publication number: **0 040 175**
**B1**

(12)

# EUROPEAN PATENT SPECIFICATION

(45) Date of publication of patent specification: **15.08.84**

(51) Int. Cl.³: **A 22 C 11/12**

(21) Application number: **81810172.7**

(22) Date of filing: **06.05.81**

(54) Machine for automatically tying knots by means of a string on a gut stuffed with meat.

(30) Priority: **08.05.80 CH 3586/80**

(43) Date of publication of application:
**18.11.81 Bulletin 81/46**

(45) Publication of the grant of the patent:
**15.08.84 Bulletin 84/33**

(84) Designated Contracting States:
**AT BE DE FR GB IT LU NL SE**

(56) References cited:
**DE - B - 1 507 975**
**FR - A - 2 297 002**

(73) Proprietor: **Pedroia, Luigi**
**Via Cadogno 1**
**CH-6648 Minusio (CH)**

(72) Inventor: **Pedroia, Luigi**
**Via Cadogno 1**
**CH-6648 Minusio (CH)**

(74) Representative: **Baggiolini, Raimondo et al,**
**Racheli & Fiammenghi Via San Gottardo 15**
**CH-6900 Lugano (CH)**

Courier Press, Leamington Spa, England.

## Description

The present invention relates to a machine for automatically tying knots by means of a string on a gut stuffed with meat (salted meat) comprising the features indicated in the first part of claim 1.

There is already known a machine of the same inventor (CH—A—579 351 and CH—A—587 610 as well as the FR—A—2 297 002) comprising a device adapted to squeeze the gut over a predetermined length in order to remove the meat therefrom prior to tying and a spool which is rotatable about its longitudinal axis directed parallel to the direction of feed of the gut and which carries a stock of string.

In the machine according to the present invention, the knot is tied through a translatory, not a rotative, motion of the spool. Furthermore, the path followed by the string between succcessive knots has a helical shape.

In addition to simplifying the design of the machine, this latter form of tying permits a kind of knotting which is very close to knotting by hand, and further results in the string adhering perfectly to the gut.

The machine embodying the invention is characterized in that the spool is enclosed within a housing forming an assembly which is movable between two positions along the axis of the spool; that the machine comprises an elongated element arranged with its longitudinal axis perpendicular to the direction of feed of the gut and having a first terminal portion which includes an orifice for the passage of the gut and a second terminal portion which is constituted by a hook-shaped element adapted to allow through its eye the passage of the assembly on its way between the two positions; that the elongated element is rotatable about the axis through the centre of the orifice; that the hook-shaped element carries means on its outer surface for temporarily supporting a part of a loop formed by the string; and that the machine comprises an element which is movable parallel to the feed direction of the gut and adapted to detach the loop of the string from said supporting means.

A more complete understanding may be gained from the attached drawings, in which an illustrative embodiment of the invention is shown, and wherein:

— Figure 1 is a schematic perspective view of the arrangement of the essential elements of the machine taken from the side entered by the gut;
— Figure 2 is a view of the same elements from the side opposite to the side from which issues the gut after being tied;
— Figure 3 is a schematic perspective view of the various terminal positions of the spool and the path followed by the string during a tying operation;

— Figure 4 is a schematic front view of Figure 3;
— Figure 5 is a cross-sectional view along the axis of the spool carrying the string reserve;
— Figure 6 is a schematic view of a section of gut on its way to being tied with two successive knots on the parts adjacent to, instead of on, the section from which the sausage has been removed;
— Figures 7 and 8 are schematic views of two successive stages of the tying operation showing the translatory motion of the spool and the spatial path followed by the length of string unwound therefrom;
— Figure 9 is a schematic view, on a larger scale, of the momentary blocking of the string while it is being tied.

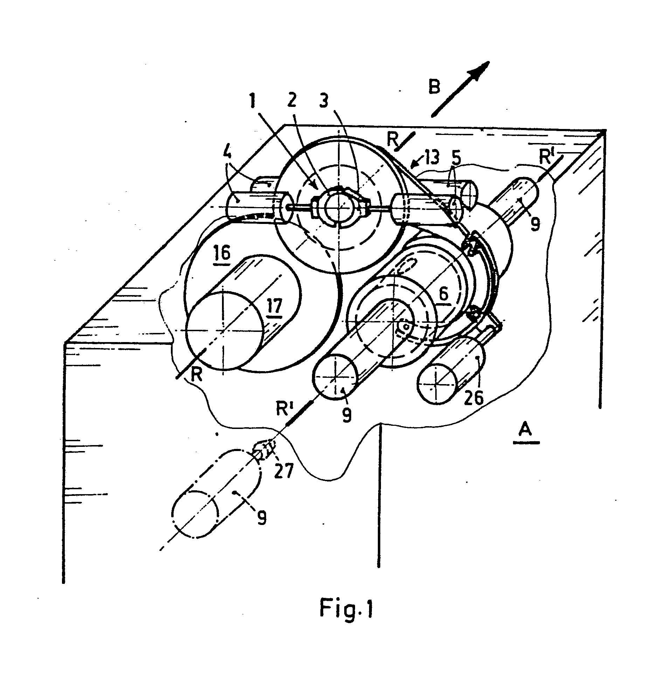

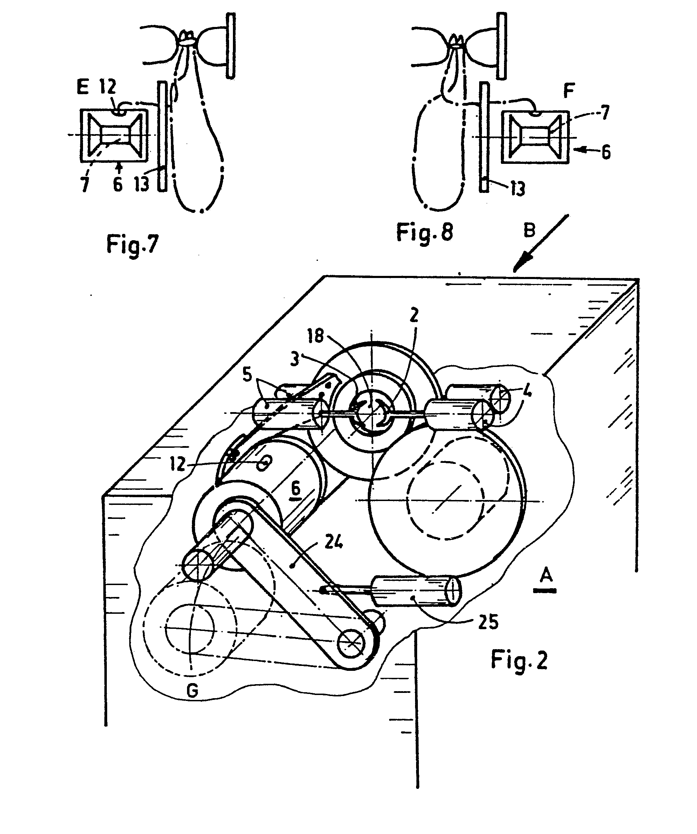

The machine according to the invention comprises a structure A in which are arranged the various members for the tying operation, to wit: a device 1 of known construction adapted to squeeze the gut along a given stretch "t" in order to remove the sausage to prepare for the tying of one or more knots. The device 1 comprises two jaws 2,3 (Figures 1,2), the V-shaped ends of which act against each other and are set in reciprocating motion via mechanical means or with the aid of pneumatic pistons 4,5; a spool assembly 6 carrying the string reserve and comprising the spool proper 7 which, in order to have a very low moment of inertia, is made of a material with an extremely low specific gravity such as, for example, aluminum or anodized aluminum alloys, or a synthetic material. A conical hole 8 is drilled at the center thereof in order to rotate it by means of a motor, the shaft of which is equipped with a conical friction clutch.

With the interposition of roller bearings 10 the spool 7 is rotatably mounted within a housing 11 which, in turn, is guided by appropriate means (not shown) to permit the spool assembly to make translatory motions, thereby preventing said housing from making any rotative motions. A hole 12 is drilled in the housing 11 from which the string issues as it unwinds.

To be more precise, as the string unwinds from the spool, it reaches the gut from a single opening which can only carry out a translatory motion extending substantially parallel to the direction of feed of the gut; an elongated element 13 adapted to move and to guide the string around and along the section of squeezed gut in order to place the string on an axial path having the form of a polygon, allowing the spool to pass therethrough with the final insertion and passing of the spool into the polygon and subsequent pulling of the string due to the spool's rotation about its axis so that a knot is formed and tightened around said section of gut, with the issuing string adhering to the gut.

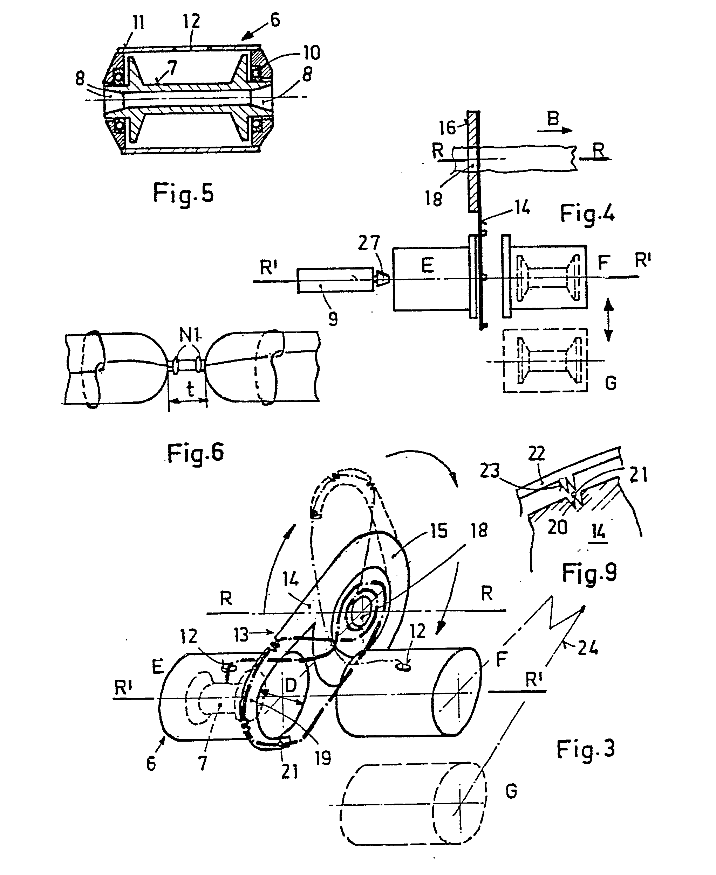

The elongated element 13, which is mounted such as to rotate about the axis of feed R—R of the gut, comprises a structure 14 having an elongated and substantially flat shape (Figures 1,3). In its first terminal portion 15, which is integral with a rotary head 16 run by a motor 17, there is drilled an orifice 18 through which passes the stuffed gut, while the second terminal portion 19 of said mechanism has the shape of a curved hook. Three double-V-shaped cavities 20 are provided therealong, from the central tip of a pair of which there protrudes a peg 21 parallel to and in the direction of feed of the gut to support a certain length of string needed to form the polygon.

An element 22 having a pair of teeth 23, also V-shaped and substantially equal to and penetrating into the V-shaped cavities mentioned above, is also provided with allowance for moving in parallel with the axis of linear forward movement of the spool. Said element 22 serves to push the string or polygon of string from said supporting pegs 21, placing it on the gut to form between two gut sections an intermediate knot or two knots N1 spaced a distance "t" from one another.

The amplitude D of the hook opening is greater than the diameter of the spool assembly so as to enable the latter to move from its final terminal position E to assume a coaxial starting terminal position F for the next tying operation. As readily apparent from Figures 3,4,7 and 8, in order to complete the final tying of the knot, the spool assembly 6 is moved from its terminal position above the direction of feed of the gut downstream of said elongated element 13 to a lower position G indicated by the broken lines in Figures 2,3,4 as a result of the angular motion imparted thereto by a lever 24 having a pneumatic piston 25 with the object of enabling the pegs 21 to catch the string before said elongated element makes its second rotative motion. Preferably, a pneumatic motor 17 is provided to rotate said elongated element 13.

The surplus unwound string is taken up again by the presence of the above mentioned motor with the interposition of a friction clutch (also not shown).

The element 22 for detaching the length of string forming the polygon from the corresponding pegs 21 can, in turn, be moved axially by a pneumatic or any other known type of motor 26.

The machine operates as follows:

First, the gut is squeezed by means of the jaws 2,3 (Figures 1,2) over a stretch "t", the length of which depends on whether a single central knot or two spaced-apart knots N1 shall be tied. To this end, pneumatic pistons 4,5 are employed (Figures 1,2). During this operation, the spool assembly 6 is upstream of the rotary elongated element 13 viewed from the direction of feed of the gut (Figure 1).

After squeezing the gut along the stretch "t", the elongated element 13 and, thereby, the reserve or polygon of string already placed and held by the pressure exerted by the teeth 23 of the element 22 against the pegs 21 of the elongated element 13 and after the motion of the spool assembly upstream of the rotary head 16, makes a first rotative motion with respect to the axis R—R, accomplishing the first stage of the tying operation (Figure 8).

Upon completion of the first rotation of the elongated element 13 about the axis R—R and by means of a system consisting of a lever 24 and a pneumatic piston 25 the spool assembly 6 moves downward (Figures 2,3,4) to assume the position G indicated by the broken line in order to allow said elongated element to unwind from the spool the length of string needed to form the knot. Then, said assembly 6 returns to its previous position F coaxial with the final position of the spool E, after which said elongated element 13 will make a second and final rotative motion (Figures 3,4). Finally, the spool assembly 6 moves to its starting position in order to accomplish the second stage of the tying operation which consists in pulling the string to form the knot. The knot is then tightened by rotating the spool in the direction opposite to the direction in which the string is unwound and the surplus length of string is rewound.

As mentioned above, the rotative motion is imparted to the elongated element 13 by a motor 13 having a rotary head 16, while the rotative motion of the spool assembly 6 is brought about by, preferably, two conical buffers, one of which is shown at 27 in Figure 1. Said buffers, driven by an electric, pneumatic, or other type of motor 9 with the interposition of a friction clutch (not shown) are moved axially via pneumatic means.

Hydraulic, electric or mechanical devices may also be employed instead of pneumatic devices.

## Claims

1. A machine for automatically tying knots by means of a string on a gut stuffed with meat, the machine comprising a device (1) adapted to squeeze the gut over a predetermined length (t) in order to remove the meat therefrom prior to tying, a spool (7) which is rotatable about its longitudinal axis (R'—R') directed parallel to the direction (R—R) of feed of the gut and which carries a stock of string, characterised in that the spool (7) is enclosed within a housing (11) thus forming an assembly (6) which is movable between two positions (E,F) along the axis (R'—R') of the spool (7); that the machine comprises an elongated element (13) arranged with its longitudinal axis perpendicular to the direction (R—R) of feed of the gut and having a first terminal portion (15) which includes an orifice (18) for the passage of the gut and a second terminal portion which is constituted by a hook-shaped element (19) adapted to allow through its eye the passage of the assembly (6) on its way between the two positions (E—F); that the elongated element (13) is rotatable about the axis (R—R) through the centre of the orifice (18); that the hook-shaped element (19) carries means (20, 21) on its outer surface for temporarily supporting a part of a loop formed by the string; and that the machine comprises an element (22) which is movable parallel to the feed direction (R—R) of the gut and adapted to detach the loop of the string from said supporting means.

2. The machine as defined in claim 1 characterised in that the housing (11) of said assembly (6) is prevented from rotating and, in turn, has a hole (12) through which issues the length of string required for the tying or on its way to being wound, once knotting has been accomplished.

3. The machine as defined in claim 1, characterized in that along the external curved portion (19) of said elongated element (13) there are provided double-V notches (20), from the central tip of which there protrudes a peg (21) parallel to the direction (R—R) of feed of the gut.

4. The machine as defined in claim 1, characterized in that said element (22), movable parallel to the feed direction (R—R) by a motor, comprises two adjacent profiled V-shaped projections (23) for pushing the string out of said pegs (21) and removing it from said elongated element (13).

5. A process for automatically tying knots by means of a string on a gut stuffed with meat, using the machine according to claim 1, characterized in that the knot is tied by means of the spool in following positions:

— a final position (E) of the spool assembly (6) upstream of said elongated element (13) which rotates in order to form the polygon of string;
— a position (F) of the spool assembly (6) downstream of said elongated element (13) to allow the latter to make a first rotative and tying motion;
— a position (G) rotated angularly and downwardly to allow said elongated element (13) to unwind, through a rotative motion, the length of string required for the tying, followed by its return to the previous position (F), finally assuming its final position (E) upstream of said elongated element (13) in order to achieve the second tying stage, that is to say, pulling the string so as to form the knot.

**Patentansprüche**

1. Maschine zum automatischen Binden von Knoten mittels Garn an einem fleischgefüllten Darm, wobei die Maschine eine Vorrichtung (1) zum Zusammendrücken des Darmes entlang einer vorgegebenen Länge (t) besitzt, zum Entfernen des Fleisches darin vor dem Binden, eine Spule (7) welche um ihre Längsachse (R'—R') drehbar ist die parallel zur Zuführungsrichtung (R—R) des Darmes ausgerichtet ist und einen Garnvorrat trägt, dadurch gekennzeichnet, dass die Spule (7) in ein Gehäuse (11) eingeschlossen ist und damit eine Einheit (6) bildet die zwischen zwei Positionen (E, F) entlang der Achse (R'—R') der Spule (7) bewegbar ist; dass die Maschine ein längliches Teil (13) besitzt das mit ihrer Längsachse senkrecht zu des Zuführrichtung (R—R) des Darmes angeordnet ist und einen ersten Endbereich (15) besitzt, der eine Oeffnung (18) dür den Durchgang des Darmes umfasst und einen zweiten Endbereich der aus einem hakenförmigen Teil (19) besteht, und den Durchgang, durch dessen Oeffnung, der Einheit (6) auf ihrem Wag zwischen den zwei Positionen (E—F) erlaubt; dass das längliche Teil (13) um die Achse (R—R) durch den Mittelpunkt der Oeffnung (18) drehbar ist; dass der hakenförmige Teil (19) an seiner Aussenfläche Mittel (20, 21) trägt) zum vorübergehenden Stützen eines Teils einer durch das Garn gebildeten Schlaufe; und dass die Maschine ein Teil (22) umfasst das parallel zu der Zuführrichtung (R—R) des Darmes bewegbar ist und zum Loslösen der Garnschlaufe von den Stützmittel ausgebildet ist.

2. Maschine nach Patentanspruch 1, dadurch gekennzeichnet, dass das Gerhäuse (11) der Einheit (6) am Drehen gehindert ist und anderseits ein Lock (12) besitzt durch das hindurch die erforderliche Länge Garn austritt zum Binden, oder im Verlauf des Aufwindens nach erfolgtem Binden.

3. Maschine nach Patentanspruch 1, dadurch gekennzeichnet, dass entlang dem gebogenen äusseren Bereich (19) des länglichen Teils (13) ein doppeltes V aufweisende Vertiefungen (20) vorgesehen sind, von derem mittlerem Höchstpunkt ein Zapfen (21) sich parallel zu der Zuführrichtung (R—R) des Darmes hin erstreckt.

4. Maschine nach Anspruch 1, dadurch gekennzeichnet, dass das mittels einem Motor parallel zu der zuführrichtung (R—R) verschiebbare Teil (22) zwei anliegende, V-förmig ausgebildete Vorsprünge (23) besitzt um das Garn von den Zapfen (21) weg zu stossen und es vom länglichen Teil (13) loszulösen.

5. Verfahren zum automatischen Binden von Knoten mittels Garn an einem fleischgefüllten Darm unter Verwendung der Maschine nach Anspruch 1, dadurch gekennzeichnet, dass der Knoten mittels der Spule in den folgenden Lagen gebunden wird:

— in einer Endlage (E) der Spulen-Einheit (6) oberhalb des länglichen Teils (13), die zum Bilden des Garn-Vielecks drehbar ist;
— eine Lage (F) der Spulen-Einheit (6) unterhalb des länglichen Teils (13), damit dieser eine erste Drehund Bindebewegung ausführen kann;
— eine Lage (G) die um einen Winkelbereich nach unten gedreht ist, damit das längliche Teil (13) infolge einer Drehbewegung die Länge an Garn wie sie zum Binden erforderlich ist, abwickelt, gefolgt durch dessen Rückkehr in die vorausgehende Lage (F), und schlussendlich oberhalb des länglichen Teils (13) die Endlage (E) einnimmt un damit den zweiten Bindevorgang zu beenden, d.h. die Straffung des Garnes zum Bilden des Knotens.

**Revendications**

1. Machine pour faire automatiquement des noeuds au moyen d'une ficelle sur un boyau rempli de chair à saucisse, la machine comprenant un dispositif (1) destiné à serrer le boyau sur une longueur prédéterminée (t) afin d'en enlever la chair à saucisse avant de faire un noeud et une bobine (7) qui peut tourner autour de son axe longitudinal (R'—R') dirigé parallèlement à la direction (R—R) de l'avancement du boyau et qui porte une réserve de ficelle, caractérisée en ce que la bobine (7) est enfermée à l'intérieur d'un boîtier (11) en formant ainsi un ensemble (6) mobile entre deux positions (E, F) le long de l'axe (R'—R') de la bobine 7; en ce que la machine comprend un élément allongé (13) disposé de façon que son axe longitudinal soit perpendiculaire à la direction (R—R) de l'avancement du boyau et ayant une première partie d'extrémité (15) qui présente un orifice (18) pour le passage du boyau et une seconde partie d'extrémité que est constituée par un élément en forme de crochet (19) destiné à permettre à travers son évidement le passage de l'ensemble (6) sur son parcours entre les deux positions (E—F); en ce que l'élément allongé (13) peut tourner autour de l'axe (R—R) passant par le centre de l'orifice (18); en ce que l'élément en forme de crochet (19) porte sur sa surface extérieure un moyen (20—21) pour supporter temporairement une partie d'une boucle formée par la ficelle; et en ce que la machine comprend un élément (22) qui est mobile parallèlement à la direction d'avancement (R—R) du boyau et adapté pour détacher la boucle de la ficelle dudit moyen de support.

2. Machine selon la revendication 1, caractérisée en ce que le boîtier (11) dudit ensemble (6) est empêché de tourner et présente un trou (12) pour la sortie de la longueur de ficelle requise pour le nouage ou alternativement pour l'enroulement de ficelle en retour après la formation d'un noeud.

3. Machine selon la revendication 1, caractérisée en ce que le long de la partie extérieure incurvée (19) dudit élément allongé (13) sont formées de encoches en double V (20) de la pointe centrale desquelles dépasse une cheville (21) parallèle à la direction (R—R) de l'avancement du boyau.

4. Machine selon la revendication 1, caractérisée en ce que ledit élément (22) déplaçable parallèlement à la direction d'avancement (R—R) par un moteur, comprend deux saillies adjacentes (23) profilées en forme de V pour pousser la ficelle au-delà desdites chevilles (21) et l'enlever dudit élément allongé (13).

5. Procédé pour faire automatiquement des noeuds au moyen d'une ficelle sur un boyau rempli de chair à saucisse et utilisant la machine selon la revendication 1, caractérisé en ce que le noeud est établi au moyen de la bobine dans les positions suivantes:

— une position finale (E) de l'ensemble à bobine (6) en amont dudit élément allongé (13) qui tourne pour former le polygone de ficelle;
— une position (F) de l'ensemble à bobine (6) en aval dudit élément allongé (13) pour permettre à celui-ci de faire un premier mouvement de rotation et de nouage;
— une position (G) prise par rotation angulaire et vers le bas pour permettre audit élément allongé (13) de dérouler, par un mouvement de rotation, la longueur de ficelle requise pour le nouage, ce qui est suivi par le retour de l'ensemble à bobine à sa position précedente (F) puis finalement à sa position finale (E) en amont dudit élément allongé (13) pour l'accomplissement du second stage de nouage, c'est-à-dire pour tirer la ficelle de façon à former le noeud.

Fig.1

1

Fig. 7

Fig. 8

Fig. 2

Fig.5

Fig.4

Fig.6

Fig.9

Fig.3